# EUROPÄISCHE PATENTSCHRIFT

(11) **EP 2 462 534 B1**
(45) Veröffentlichungstag und Bekanntmachung des Hinweises auf die Patenterteilung: **01.11.2017**
(21) Anmeldenummer: 10723131.8
(22) Anmeldetag: 11.06.2010
(51) Int. Cl.: G06K 9/00

(54) **VERFAHREN ZUM ÜBERWACHEN EINES BEREICHS**
METHOD TO MONITOR AN AREA
PROCÉDÉ DE SURVEILLANCE D'UNE ZONE

(30) Priorität: 04.08.2009 DE 102009028212
(43) Veröffentlichungstag der Anmeldung: 13.06.2012
(73) Patentinhaber: Robert Bosch GmbH, 70442 Stuttgart (DE)
(72) Erfinder: MEYER, Michael, 31079 Sibbesse (DE)
(86) Internationale Anmeldenummer: PCT/EP2010/058199
(87) Internationale Veröffentlichungsnummer: WO 2011/015401

(56) Entgegenhaltungen:
- DE-A1- 19 932 662
- DE-A1- 19 938 845
- "Chapter 2 - Identifying Regions of Interest in Image Sequences" In: Javed Omar, Shah Mubarak: "Automated Mutli-Camera Surveillance - Algorithms and Practice" 2008, Springer Sciene+Business Media, LLC , New York, US , XP002592115 ISBN: 978-0-387-78880-7 , Seiten 11-28 Seite 11 Seite 15, Absatz 1 Kaptel 2.4.2.2; Seite 19 - Seite 21; Abbildung 2.4
- A. Homayoun Kamkar-Parsi ET AL: "A multi-criteria model for robust foreground extraction", Proceedings of the third ACM international workshop on Video surveillance & sensor networks , VSSN '05, 1 January 2005 (2005-01-01), page 67, XP055342093, New York, New York, USA DOI: 10.1145/1099396.1099410 ISBN: 978-1-59593-242-6

## Beschreibung

### Technisches Feld

Die Erfindung betrifft ein Verfahren zum Überwachen eines Bereichs und eine Einrichtung zur Durchführung des Verfahrens.

### Stand der Technik

In öffentlich zugänglichen, stark frequentierten Gebäuden, wie bspw. in Supermärkten, Theatern und Sporthallen, müssen Notausgänge bereitgestellt werden. Hierbei ist insbesondere von Bedeutung, dass ausreichend Notausgänge zur Verfügung stehen. Es ist darauf zu achten, dass diese Notausgänge nicht mit irgendwelchen Gegenständen zugestellt sind, um ihre Wirksamkeit nicht zu beeinträchtigen. Allerdings sind derzeit keine geeigneten technischen Mittel bekannt, um ein Verstellen von Notausgängen wirksam und sicher zu erkennen.

So werden z.B. Lichtschranken zur Überwachung eingesetzt. Bei diesen hat sich aber herausgestellt, dass diese zu kompliziert sind, um ganze Flächen zu überwachen. Eine weitere Möglichkeit ist durch den Einsatz von Gewichtssensoren, die im Fußboden installiert sind, gegeben. Diese sind jedoch nur mit hohem baulichen Aufwand zu installieren.

Ein weiterer bekannter Ansatz besteht darin, betroffene Bereiche mit einer Videokamera zu überwachen. Derzeit bekannte Verfahren zur Überwachung mit einer Videokamera basieren auf dem Prinzip einer Erkennung von Bildhelligkeitsänderungen. Diese Verfahren sind jedoch sehr empfindlich gegenüber Veränderungen der Beleuchtungsbedingungen und sind daher nicht ausreichend robust.

Verfahren zum Überwachen von Bereichen und insbesondere zum Überwachen von Personen in diesen Bereichen sind bekannt.

Die Druckschrift DE 102 10 926 A1 beschreibt eine Vorrichtung und ein Verfahren zur Verfolgung wenigstens eines Objekts in einer Szene. Bei dem Verfahren wird, wenn ein sich bewegendes Objekt aus der Bewegung zum Stillstand kommt, die Verweildauer im Stillstand gezählt. In Abhängigkeit der Verweildauer wird eine Signalisierung erzeugt. Dabei wird das Objekt durch eine Liste oder eine Matrix bezüglich der Bewegungsrichtung und der Zeit beschrieben. Auf diese Weise wird in der überwachten Szene, in der sich üblicherweise sich bewegende Objekte befinden, ein atypisches Verhaltensmuster erkannt.

Weitere Verfahren zur Überwachung eines Bereichs, insbesondere mithilfe von Bildgradientenvergleichen sind aus den Druckschriften DE 199 32 662 A1 und DE 199 38 845 A1, sowie aus der Konferenzpublikation von Homayoun Kamkar-Parsi et al., "A Multi-Criteria Model for Robust Foreground Extraction", Proceedings of the third ACM international workshop on Video surveillance & sensor networks (VSSN'05), S. 67-70, Singapur, 2005, bekannt. Die Erfindung dient insbesondere dazu, das Verstellen von Bereichen bzw. Flächen dauerhaft, d.h. robust, zu erkennen.

### Offenbarung der Erfindung

Die Erfindung betrifft ein Verfahren zum Überwachen eines Bereichs, bei dem mit einer Kamera zumindest ein Bild des Bereichs erfasst und mit einem dem Bereich zugeordneten Referenzbild verglichen wird gemäß Anspruch 1. Ausgestaltungen der Erfindung ergeben sich aus den abhängigen Ansprüchen 2 bis 8. Die Erfindung betrifft weiterhin eine Überwachungseinrichtung, die zur Durchführung des Verfahrens ausgebildet ist, gemäß Anspruch 9. Diese weist eine Kamera, insbesondere eine Videokamera, die zum Erfassen mindestens eines Bilds des zu überwachenden Bereichs ausgelegt ist, eine Speichereinheit bzw. einen Bildspeicher, in der bzw. dem ein Referenzbild abgelegt ist, und eine Bildauswerteeinheit, die zum Vergleich des erfassten Bilds mit dem Referenzbild ausgebildet ist, auf.

Das vorgestellte Verfahren ermöglicht, ein Verstellen von Bereichen bzw. von Flächen sicher und robust zu erkennen. Der Vorteil der Verwendung einer Kamera, in der Regel einer Videokamera, besteht insbesondere darin, dass diese einfach unter der Decke montiert werden kann. Somit sind keine baulichen Maßnahmen erforderlich. Weiterhin ist das beschriebene Verfahren, zumindest in einigen der Ausführungen, besonders robust gegenüber Beleuchtungsänderungen in dem zu überwachenden Bereich.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen
- Figur 1: zeigt in schematischer Darstellung eine Ausführungsform der vorgestellten Überwachungseinrichtung.
- Figur 2: zeigt in einem Flussdiagramm den Ablauf einer Ausführung des beschriebenen Verfahrens.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

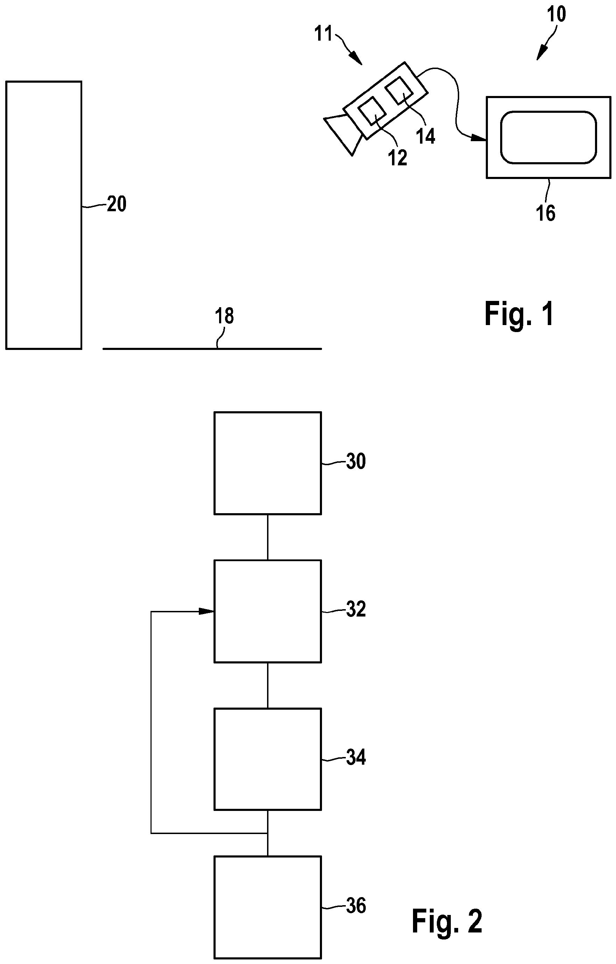

Figur 1 zeigt eine Überwachungseinrichtung 10 mit einer Kamera 11, in diesem Fall eine Videokamera, mit einer integrierten Bildauswerteeinheit 12 bzw. einem Bildspeicher und einer integrierten Speichereinheit 14. Weiterhin ist die Kamera 11 mit einer Recheneinrichtung 16 verbunden. Als Recheneinrichtung 16 kann bspw. ein mobiler Rechner bzw. ein Laptop verwendet werden. Mit der Kamera 11 wird ein Bereich 18 bzw. eine Freifläche vor einem Notausgang 20 überwacht.

Die Kamera 10 dient somit dazu, den Bereich 18 zu überwachen, in dem keine Gegenstände abgestellt werden dürfen. Üblicherweise wird bei der Einrichtung bzw. Inbetriebnahme der Überwachungseinrichtung 10 ein aktuelles Kamerabild des zu überwachenden Bereichs 18 aufgenommen und als Referenzbild in der integrierten Speichereinrichtung 14 abgelegt. Alternativ kann auch ein mit einer anderen Aufnahmeeinrichtung erstelltes Referenzbild abgelegt werden. Weiterhin ist es möglich, dieses Referenzbild zu bestimmten Zeitpunkten zu aktualisieren. Dies kann in regelmäßigen Zeitabständen oder auch ereignisabhängig durchgeführt werden. Wird das Referenzbild in regelmäßigen zeitlichen Abständen ersetzt, können sich ändernde Umwelteinflüsse, wie bspw. sich ändernde Lichtverhältnisse, besser berücksichtigt werden.

Mit Hilfe des Laptops 16, der an die Kamera 11 angeschlossen wird, können die im Bild relevanten Bereiche parametriert und weitere Parameter eingestellt werden. Anschließend können besonders geeignete Bildmerkmale aktueller Bilder mit Bildmerkmalen des Referenzbildes verglichen und auf diese Weise ein Ähnlichkeitsmaß ermittelt werden. Wenn das Ähnlichkeitsmaß für die Dauer einer einstellbaren Auslösezeit eine Schwelle unterschreitet, so wird üblicherweise ein Alarm, z. B. in Form eines akustischen Signals, gegeben.

Der Vergleich von aktuellem erfassten Bild mit dem Referenzbild kann in der Bildauswerteeinheit 12 in der Kamera 11 erfolgen. Alternativ kann dieser Vergleich auch mittels in dem Laptop 16 abgelegter Programmschritte erfolgen.

In Figur 2 ist ein möglicher Verlauf des beschriebenen Verfahrens dargestellt. In Schritt 30 wird ein geeignetes Referenzbild erzeugt und abgelegt. In Schritt 32 wird ein aktuelles Bild erfasst. Es bietet sich dabei an, in regelmäßigen Abständen, bspw. einmal pro Sekunde, ein aktuelles Bild zu erfassen. In Schritt 34 wird das erfasste Bild mit Hilfe eingerichteter Algorithmen verglichen. Ergibt der Vergleich eine kritische Abweichung, erfolgt in Schritt 36 ein Alarm. Ansonsten werden die Schritte 32 und 34, das Erfassen des aktuellen Bilds und der Vergleich, wiederholt.

Das hier vorgeschlagene Verfahren kann bspw. auf der Erkenntnis beruhen, dass abgestellte Gegenstände stets durch neue Kanten erkennbar sind. Solche Kanten sind an einen hohen örtlichen Gradienten im Videobild erkennbar. Deshalb wird folgender Algorithmus zur Erkennung verwendet:
1. Bestimme alle Stellen im Bild, an denen
   a. im aktuellen Bild ein hoher Gradient vorhanden ist
   b. im Referenzbild kein hoher Gradient erkennbar ist (die Kante muss neu sein!)
2. Bestimme den normierten Kreuzkorrelationskoeffizienten zwischen den Gradienten im Referenzbild und den Gradienten im aktuellen Bild unter Verwendung nur der in Schritt 1 bestimmten Stellen.
3. Vergleiche den Kreuzkorrelationskoeffizienten mit einer einstellbaren Schwelle. Wird die Schwelle unterschritten, so wird der Bereich als "belegt" erkannt.
4. Der zuvor beschriebene Vergleich wird regelmäßig durchgeführt, bspw. einmal pro Sekunde. Wird innerhalb einer eingestellten Auslösezeit (z. B. eine Minute) bei jedem zuvor beschriebenen Vergleich auf "belegt" erkannt, so wird ein Alarm ausgelöst.

## Patentansprüche

1. Verfahren zum Überwachen eines Bereichs (18), insbesondere eines Bereichs (18) vor einem Notausgang (20), bei dem mit einer Kamera (11) zumindest ein Bild des Bereichs (18) erfasst wird und mit einem dem Bereich (18) zugeordneten Referenzbild verglichen wird, bei dem der Vergleich basierend auf im erfassten Bild erkennbaren Gradienten durchgeführt wird, wobei alle Stellen im Bild bestimmt werden, an denen im aktuellen Bild ein hoher Gradient vorhanden ist und an denen im Referenzbild kein hoher Gradient erkennbar ist, und bei dem ein normierter Kreuzkorrelationskoeffizient zwischen den Gradienten im Referenzbild und den Gradienten im aktuellen Bild unter Verwendung nur der bestimmten Stellen bestimmt wird.

2. Verfahren nach Anspruch 1, bei dem eine Anzahl von Bildern erfasst wird.

3. Verfahren nach Anspruch 2, bei dem eine Bildfolge erfasst wird.

4. Verfahren nach Anspruch 2 oder 3, bei dem der Vergleich zeitkontinuierlich erfolgt.

5. Verfahren nach einem der Ansprüche 1 bis 3, bei dem der Vergleich zu diskreten Zeitpunkten durchgeführt wird.

6. Verfahren nach einem der Ansprüche 1 bis 5, bei dem im Referenzbild relevante Bereiche parametriert werden.

7. Verfahren nach einem der Ansprüche 1 bis 6, bei dem anhand des Vergleichs ein Ähnlichkeitsmaß zwischen Referenzbild und erfasstem Bild ermittelt wird und bei einem gewissen Abweichen ein Alarmsignal abgegeben wird.

8. Verfahren nach einem der Ansprüche 1 bis 7, bei dem ein Verstellen des Bereichs (18) mit Gegenständen, die durch neue Kanten erkennbar sind, erkannt wird.

9. Überwachungseinrichtung, die zur Durchführung eines Verfahrens nach einem der Ansprüche 1 bis 8 eingerichtet ist, mit einer Kamera (11), die zum Erfassen mindestens eines Bilds eines zu überwachenden Bereichs (18), insbesondere eines zu überwachenden Bereichs (18) vor einem Notausgang (20), ausgelegt ist, einer Speichereinrichtung (14), in der ein Referenzbild abgelegt ist, und einer Bildauswerteeinheit (12), die zum Vergleich des erfassten Bilds mit dem Referenzbild ausgebildet ist.

## Claims

1. Method to monitor an area (18), in particular an area (18) in front of an emergency exit (20), wherein, by means of a camera (11), at least one image of the area (18) is captured and is compared with a reference image assigned to the area (18), wherein the comparison is carried out on the basis of gradients which can be identified in the captured image, wherein all locations in the image at which a high gradient is present in the current image and at which no high gradient can be identified in the reference image are determined, and wherein a normalized cross-correlation coefficient is determined between the gradients in the reference image and the gradients in the current image using only the determined locations.

2. Method according to Claim 1, wherein a number of images are captured.

3. Method according to Claim 2, wherein an image sequence is captured.

4. Method according to Claim 2 or 3, wherein the comparison is effected time-continuously.

5. Method according to any of Claims 1 to 3, wherein the comparison is carried out at discrete points in time.

6. Method according to any of Claims 1 to 5, wherein areas that are relevant in the reference image are parameterized.

7. Method according to any of Claims 1 to 6, wherein, on the basis of the comparison, a measure of similarity between reference image and captured image is determined and an alarm signal is output upon a certain deviation.

8. Method according to any of Claims 1 to 7, wherein an obstruction of the area (18) with objects which can be identified by new edges is identified.

9. Surveillance device which is configured for carrying out a method according to any of Claims 1 to 8, comprising a camera (11) designed to capture at least one image of an area (18) to be monitored, in particular an area (18) to be monitored in front of an emergency exit (20), a memory device (14), in which a reference image is stored, and an image evaluation unit (12), which is designed to compare the captured image with the reference image.

## Revendications

1. Procédé de surveillance d'une zone (18), notamment d'une zone (18) située à l'avant d'une issue de secours (20), dans lequel au moins une image de la zone (18) est détectée à l'aide d'une caméra (11) et est comparée à une image de référence associée à la zone (18), dans lequel la comparaison est effectuée sur la base de gradients pouvant être reconnus dans l'image détectée, dans lequel on détermine tous les points de l'image à l'emplacement desquels un gradient plus élevé est présent dans l'image actuelle et à l'emplacement desquels aucun gradient plus élevé ne peut être reconnu dans l'image de référence, et dans lequel un coefficient d'intercorrélation normalisé est déterminé entre les gradients dans l'image de référence et les gradients dans l'image actuelle en utilisant uniquement les points déterminés.

2. Procédé selon la revendication 1, dans lequel un nombre d'images est détecté.

3. Procédé selon la revendication 2, dans lequel une série d'images est détectée.

4. Procédé selon la revendication 2 ou 3, dans lequel la comparaison est effectuée en continu.

5. Procédé selon l'une quelconque des revendications 1 à 3, dans lequel la comparaison est effectuée à des instants discrets.

6. Procédé selon l'une quelconque des revendications 1 à 5, dans lequel des zones pertinentes sont paramétrées dans l'image de référence.

7. Procédé selon l'une quelconque des revendications 1 à 6, dans lequel une mesure de ressemblance entre l'image de référence et l'image détectée est déterminée sur la base de la comparaison et dans lequel un signal d'alarme est émis pour un certain écart.

8. Procédé selon l'une quelconque des revendications 1 à 7, dans lequel un ajustement de la zone (18) est reconnu au moyen d'objets qui peuvent être reconnus par l'intermédiaire de nouveaux bords.

9. Dispositif de surveillance conçu pour mettre en oeuvre un procédé selon l'une quelconque des revendications 1 à 8, comportant une caméra (11) qui est configurée pour détecter au moins une image d'une zone (18) à surveiller, notamment d'une zone (18) devant être surveillée à l'avant d'une issue de secours (20), un dispositif à mémoire (14) dans lequel est stockée une image de référence, et une unité d'analyse d'image (12) qui est conçue pour comparer l'image détectée à l'image de référence.
